# EUROPEAN PATENT APPLICATION

(11) **EP 1 072 834 A1**
(43) Date of publication of application: **31.01.2001**
(21) Application number: 00113217.4
(22) Date of filing: 21.06.2000
(51) Int. Cl.: F16L 5/10, H02G 3/22

(54) **Cable gland and/or pipe gland.**

(30) Priority: 28.07.1999 IT GE990025
(71) Applicant: BOCCHIOTTI SOCIETA'PER L'INDUSTRIA ELETTROTECNICA S.P.A., I-16121 Genova (IT)
(72) Inventor: Messeri, Massimo, 16121 Genova (IT)
(74) Representative: Porsia, Attilio, Dr.

(57) **Abstract**

Cable gland and/or pipe gland for connector and/or component boxes for electrical systems, consisting of a sealing element (1) introduced into a hole (12) made onto a wall of said box (10), and of an element (2) for the supporting of the cable and the protection of the sealing element (1), the latter being coupled with said sealing element (1).

## Description

The present invention relates to a cable gland and/or pipe gland, in particular for connector boxes and/or component boxes for electrical systems.

It is known about cable glands consisting of rubber diaphragms or other flexible materials introduced into or directly molded onto the holes of component or connector boxes, in particular those used for the equipment of outside electrical systems, in which it is necessary to ensure a certain sealing degree for the cable going into the box. Said devices show some drawbacks which reduce the efficiency of their action of cable protection.

First of all, the compliance of the material they are made of, though ensuring on the one hand a sealing action on the cable, on the other does not ensure any kind of support, so that, as time passes, the cable tends to widen the hole into which it is introduced, thus eliminating the sealing action of the device.

Moreover, the materials of this kind are subject to ageing if exposed to atmospheric agents, which has direct consequences onto the sealing action concerning the cable.

The present invention aims at providing a cable gland and/or pipe gland showing a better resistance to deterioration both of mechanical type and due to the action of external agents, beside maintaining an efficient sealing action with respect to the cable introduced into it.

The object of the present invention, therefore, is a cable gland for connector and/or component boxes for electrical systems, characterized in that it consists of a sealing element introduced into a hole made onto a wall of said box, and of a support and protection element for the cable, the latter being coupled with said sealing element.

In a form of embodiment said sealing element can be a membrane made of an elastomeric material or the like, whereas the support and protection element can consist of a stiff lid coupled with said sealing element, possibly provided with a plurality of lines of pre-established fracture, so as to allow the introduction of cables having different sections.

Advantageously, the sealing element is provided with a support frame made of a stiff material, carried out as one piece with said protection element.

Further advantages and characteristics of the device according to the present invention will be evident from the following description of a form of embodiment of said invention, carried out as a mere non-limiting example, with reference to the enclosed drawings, in which:
Fig. 1 is a perspective view of the device according to the present invention;
Fig. 2 is view in longitudinal section of the device shown in fig. 1; and
Figs. 3 and 4 are two section views showing the device according to the invention, respectively before and after the installation of a cable in said device.

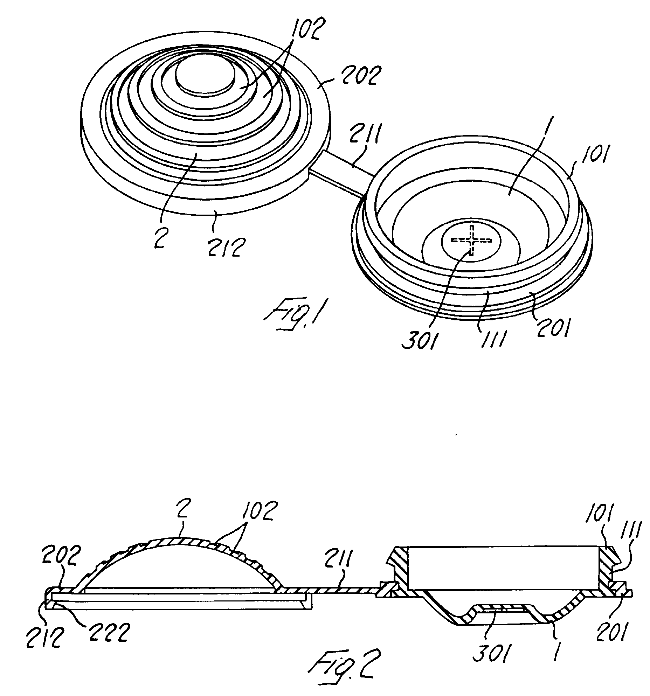

Fig. 1 shows the cable gland according to the present invention; the numeral 1 indicates the membrane 1, made of an elastomeric material or the like. Said membrane shows the axial flange 101, on whose side wall the groove 111 is obtained. In a central position with respect to said membrane wall the cross-shaped weakening cut 301 is carried out; the membrane 1 is located on the stiff frame 201, which is connected by means of the strip 211 to the lid 2, the latter being stiff, too. Onto the top of the lid the grooves 102 of pre-established fracture are carried out, and the peripheral rim 202 of the lid shows the strip 202 folded perpendicularly to said rim 202.

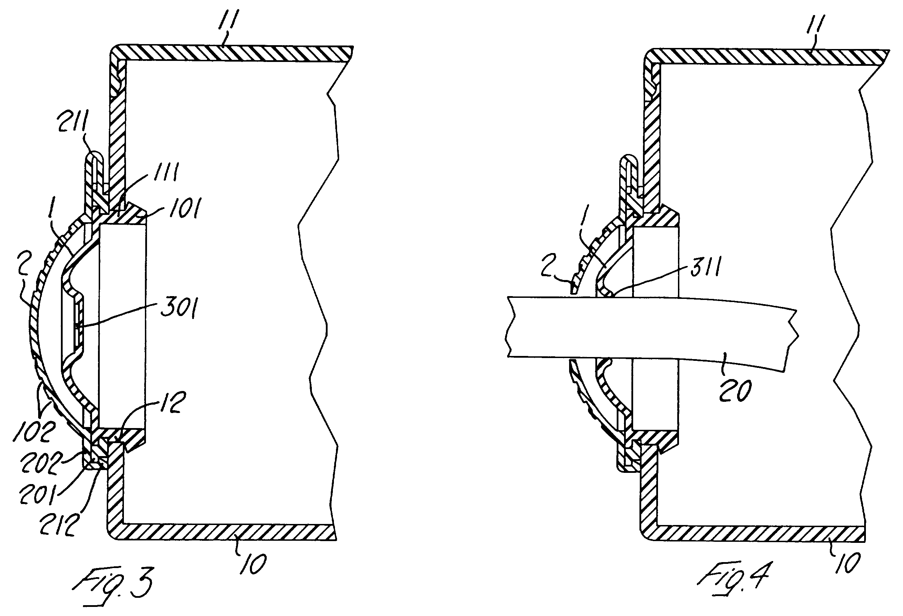

Fig. 2 shows the device according to the invention in longitudinal section. As can be observed from the figure, the lid 2 and the frame 201 of the membrane 1 are made as one piece in the same material and joined by means of the strip 211. In the lid 2 the strip 212 shows the tooth-shaped bulge 222 on its side wall directed towards the inside of said lid 2.

Fig. 3 shows the device according to the invention when installed on a box 10 provided with a closing plane 11. The device is introduced into the through hole 12 made onto the wall of the box 10. As can be observed from the figure, the groove 111 carried out into the flange 101 of the membrane 1 provides a housing for the wall of the box 10. Moreover, the lid 2 is located on the membrane 1, and the tooth-shaped bulge 222 of the strip 212 of the lid 2 cooperates with the frame 201, thus balancing the coupling.

Fig. 4 shows the device according to the invention with a cable introduced into it. The lid 2 shows removed portions along one of the grooves 102 of pre-established fracture, and the membrane shows the hole 311 on the cut 301.

The working of the device according to the invention will be evident from the following. With specific reference to figures 3 and 4, the device according to the present invention is introduced, during the assembly stage, into holes suitably made onto the walls of connector and/or component boxes. The presence of the lid 2 coupling with the frame 201 of the membrane 1 prevents the latter both from accidental damages and from ageing due to atmospheric agents.

When introducing the cable 20, the installer will remove a portion of the lid 2 according to the section of the cable to be introduced; he will then perforate the membrane 1 on the cut 301. The cable will thus be introduced sealingly into the hole 12 of the box thanks to the membrane 1, and it will at the same time be suitably supported by the lid 2. The support action of the lid 2 will prevent the deformation of the membrane hole and will therefore extend the sealing action of said membrane onto the cable 20.

Advantageously, the membrane is provided with a stiff frame 201, which can ensure a steady coupling with the rim 202 of the lid 2, and in particular with the tooth-shaped bulge 222 carried out in the inner face of the strip 202 of said lid 2.

Moreover, the frame 201 and the lid 2, made of the same material, can be carried out as one piece one with the other, and connected one to the other by means of the strip 211. Said strip, among other things, also prevents the loss of the lids 2 during the storing stage before use.

## Claims

1. Cable gland and/or pipe gland for connector and/or component boxes for electrical systems, characterized in that it consists of a sealing element (1) introduced into a hole (12) made onto a wall of said box (10), and of an element for the support (2) of the cable and the protection of the sealing element (1), the latter being coupled with said sealing element (1).

2. Device according to claim 1, in which said sealing element consists of a flexible membrane (1), preferably made of an elastomeric material or the like.

3. Device according to claim 1, in which said element for the support of the cable and the protection of the sealing element (1) comprises a substantially stiff lid (2), means for the reciprocal coupling (222, 201) between said sealing element (1) and said lid (2) being provided.

4. Device according to claim 2, in which said membrane (1) is provided with a peripheral axial flange (101), provided with a groove (111) on its outer side wall.

5. Device according to claims 3 and 4, in which said membrane is provided with a frame (201), substantially stiff, radially projecting outside, said frame being coupled with a bulge (222) projecting from the inner face of the strip (212) of the rim (202) of said lid (2).

6. Device according to claim 3, in which said lid is substantially concave, its concavity being directed towards said sealing element (1).

7. Device according to claim 3, in which said lid shows grooves (102) of pre-established fracture.

8. Device according to claim 5, in which said frame (201) and said lid (2) are connected one to the other by means of a strip (211), and they are preferably made as one piece in the same material.
